# EUROPEAN PATENT SPECIFICATION

(11) **EP 2 446 648 B1**
(45) Date of publication and mention of the grant of the patent: **10.08.2016**
(21) Application number: 09779922.5
(22) Date of filing: 24.06.2009
(51) Int. Cl.: H04W 4/02, H04L 29/08, G01C 21/34, H04L 29/06

(54) **ROUTE CALCULATIONS IN IP MULTIMEDIA SUBSYSTEM**
ROUTENBERECHNUNG IN EINEM IP-MULTIMEDIASUBSYSTEM
CALCULS D'ITINÉRAIRES DANS UN SOUS-SYSTÈME MULTIMÉDIA IP

(43) Date of publication of application: 02.05.2012
(73) Proprietor: Telefonaktiebolaget LM Ericsson (publ), 164 83 Stockholm (SE)
(72) Inventor: BELINCHÓN VERGARA, María Carmen, E-28902 Getafe (ES); ESCRIBANO BULLÓN, Berta Isabel, E-28028 Madrid (ES)
(74) Representative: Elzaburu Marquez, Alberto
(86) International application number: PCT/EP2009/057891
(87) International publication number: WO 2010/149210

(56) References cited:
- POLIDORO A ET AL: "Simple Mobile Services for IMS" NEXT GENERATION MOBILE APPLICATIONS, SERVICES AND TECHNOLOGIES, 2008. NGMAST '08. THE SECOND INTERNATIONAL CONFERENCE ON, IEEE, PISCATAWAY, NJ, USA, 16 September 2008 (2008-09-16), pages 184-189, XP031409668 ISBN: 978-0-7695-3333-9
- FALCHUK B ET AL: "Mobile contextual mashup service for IMS" INTERNET MULTIMEDIA SERVICES ARCHITECTURE AND APPLICATIONS, 2008. IMSAA 2008. 2ND INTERNATIONAL CONFERENCE ON, IEEE, PISCATAWAY, NJ, USA, 10 December 2008 (2008-12-10), pages 1-6, XP031408584 ISBN: 978-1-4244-2684-3
- "Digital cellular telecommunications system (Phase 2+); Universal Mobile Telecommunications System (UMTS); LTE; Generic Authentication Architecture (GAA); Access to network application functions using Hypertext Transfer Protocol over Transport Layer Security (HTTPS) (3GPP TS 33.222 version 8.0.0 Rele" ETSI STANDARD, EUROPEAN TELECOMMUNICATIONS STANDARDS INSTITUTE (ETSI), SOPHIA ANTIPOLIS CEDEX, FRANCE, vol. 3-SA3, no. V8.0.0, 1 January 2009 (2009-01-01), XP014043549
- "3rd Generation Partnership Project; Technical Specification Group Services and System Aspects; Location Services (LCS); Service description; Stage 1 (Release 8)" 3GPP STANDARD; 3GPP TS 22.071, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 December 2008 (2008-12-01), pages 1-50, XP050360623

## Description

### TECHNICAL FIELD

The present invention generally relates to mobile positioning and route calculation services. More specifically, the present invention relates to services for route calculations offered by an IP Multimedia Subsystem.

### BACKGROUND

Nowadays, Global Positioning System (hereinafter GPS) receptors have become a quite popular tool used by millions of people all over the world, whereby a GPS user may accurately know at any time his or her geo-position. The GPS receptor was originally introduced as a newer and powerful navigational instrument in aircrafts and ships whilst, now, it has been incorporated in most of the vehicles as well as in sport activities where knowing the geo-position is, at least, helpful.

In addition and complementary to GPS receptors, plotter systems provided with a worldwide-coverage cartography have launched into the market; firstly, as isolated products connectable with GPS receptors; and, more recently, integrated with the GPS receptor as a compact GPS + Plotter unit (hereinafter GPS unit), whereby the user does not have to worry about interfaces compatibility between GPS and Plotter.

Regarding the cartography required by any Plotter unit or GPS unit, and as introducing higher and higher granularity and details, there is a need to split such cartography in smaller portions on regional and national basis. This split implies that users of GPS units have to likely buy more than one cartography set to fulfill their needs, especially where such users travel across regions and nations and want to make use of their GPS units at any time and place.

Cartography sets are generally available in the market in the form of individual Map cartridges to be introduced in the Plotter unit, or in the integrated GPS unit, and to be replaced by another Map cartridge as the user moves from a region or nation coverage area to another. This is somewhat disappointing for people who travel very often between national borders or between different coverage areas.

Regarding prices, the high penetration of GPS units in the market, especially in terrestrial vehicles, has considerably lowered the price of any commercial GPS unit, as well as the price of those Map cartridges available worldwide. Moreover, newer cars already incorporate a GPS unit and a Map cartridge appropriate to the nation or region where the car is sold.

Nevertheless, and especially in the terrestrial environment, Map cartridges have to be updated or replaced quite often as new roads appear, or as existing roads are modified, so that the most suitable facilities offered by commercial GPS units, such as guiding you from an origin to a destination following a number of highways, precisely indicating exits from one to another, and remaining distance to such exits, are still valid for use without risking the user to be lost. In this scenario, and even if Map cartridges are not that expensive as before, the continuous replacement of Map cartridges and the costs are not insignificant.

Aware of the high penetration of GPS units in the market, most of the suppliers of mobile phones, and more sophisticated mobile terminals, have provided some models with a GPS receptor and some additional facilities. However, even if a user can thus know his or her geo-location at any time and almost any place, such user cannot enjoy all the service features as provided by a complete GPS unit with integrated plotter and removable Map cartridges. In this respect, and since the size of newer mobile phones and terminals is smaller than predecessors, said newer mobile phones and terminals cannot be easily provided with a Map cartridge reader for conventional Map cartridges available in the market.

Nevertheless, this drawback may be somewhat saved thanks to several well known applications, known and used all over the world such as Google Earth ®, especially adapted for use in modem mobile terminals with access to Internet, and whereby a user can get a sort of simplified map illustrating a route from an origin position towards a destination position.

Apart from that, there are quite a few web applications accessible through Internet, which calculate a best route from an origin to a destination, including the selection and combination of different transport media such as underground, bus and train, and which allow users the establishment of some input criteria, such as the fastest route, lower number of different transport media, or the shortest distance.

However, these well known web applications cannot be expected to be updated as often as new roads appear, or as existing roads are modified, worldwide or even on national or regional basis. Even if some of these web applications, at least those on national basis, are more frequently updated, users cannot always be sure to what extent any of them is up to date, so that the information provided by said well known web applications cannot always be fully trusted, or might make the users to check more than one before deciding which one to trust and which route to choose.

On the other hand, the currently existing applications may be adapted to -calculate a best route based on the position of a user and, in some cases, some fix parameters collected from the transport media, and selection criteria received from the users.

However, the currently existing applications do not take into account any dynamic data, such as traffic jams, road/rail reparations, accidents, or other temporary and occasionally incidents that might occur and that can hardly be spread through web applications in charge of route calculation services all over the world. The document Polidora A. et al. "Simple Mobile Services for IMS" IEE, 16.8.2008, describes the process of porting simple Mobile Services architectural elements into the IMS architecture.

### SUMMARY

The present invention is aimed to at least minimize the above drawbacks and provides for a new route calculation service provided by an IP Multimedia Subsystem (hereinafter IMS) of a telecommunication network for subscribers of the IMS.

In accordance with a first aspect of the present invention, there is provided a method of providing a subscriber of an IP Multimedia Subsystem "IMS" network with a route to a destination.

This method comprises a step of configuring an application server (hereinafter AS), which is associated with the IMS network, with fix parameters to determine as first input criteria for calculations at least one criterion selected from: available transport media, transport routes, transport time-tables and combinations thereof; a step of receiving at the AS dynamic parameters from a plurality of transport media indicating respective incidental information, other than the one derivable from the fix parameters, to determine second input criteria for the calculations; a step of invoking from a user equipment (hereinafter UE), the UE being in use by a subscriber of the IMS, activation of a route calculation service towards the AS; a step of indicating from the UE to the AS a location of the subscriber and at least one given destination of the subscriber to determine third input criteria for calculations; a step of processing at the AS the first, second and third input criteria to determine a number of routes from the location of the subscriber towards the at least one given destination; and a step of submitting from the AS towards the UE the processed number of routes.

In particular, the location of the subscriber may be a geo-location and, more particularly, said geo-location might be expressed in terms of latitude and longitude, or in other 2-dimension (hereinafter 2D) or 3-dimension (hereinafter 3D) coordinates.

Generally speaking for this method, the dynamic parameters may include information preventing the fulfilment of the first input criteria. More particularly and in order to provide a more accurate result in terms of presently valid routes, the dynamic parameters received from each transport medium may include information related to events such as, amongst others, traffic jams, accidents, road reparations, rail reparations, transport medium unavailability, expectable delays, and combinations thereof.

Even though several implementations are possible, the step in this method of receiving at the AS the dynamic parameters may include a step of collecting at a transport media server from each transport medium the respective incidental information, and a step of submitting from the transport media server the respective incidental formation towards the AS. In this way, the transport media server, which may be a centralized server on national or regional basis, does not need to be permanently checking possible updates but simply awaiting notification from events. More particularly, this centralized transport media server may be connected with a hierarchical network of companies and servers in charge of, and receiving such information from, each different transport medium.

Regarding the step of indicating from the UE to the AS, in particular, the geo-location of the subscriber, this step may include a step of obtaining said geo-location from a Global Positioning System (hereinafter GPS) associated with the UE, that is connected with or integrated in the UE. Alternatively or complementary, the step of indicating from the UE to the AS the location of the subscriber may include a step of obtaining at the AS said location as provided from a General Packet Radio System (hereinafter GPRS) network where the UE accesses the IMS through.

Moreover, where the geo-location of the subscriber can be determined, the step of indicating from the UE to the AS the geo-location of the subscriber may include a step of calculating at the UE a speed vector including a speed modulo and direction of the UE, and a step of indicating said speed vector to the AS. In this way, the AS may more accurately select the number of still possible routes, discarding those which appear to be close to the subscriber but in an opposite direction, or currently inaccessible, to the direction followed by the subscriber.

Regarding the invocation or activation of a route calculation service towards the AS, and especially useful in the IMS environment, the step of invoking the best route calculation service may include a step of identifying said route calculation service by a public service identifier (hereinafter PSI), and a step of interrogating an entity of the IMS network about the AS in charge of said route calculation service. In particular, this entity to be interrogated may be a Home Subscriber Server (hereinafter HSS) of the IMS holding subscription data for the subscriber.

This method may further be enhanced where the AS in charge of the route calculation service is connected with one or more navigational and meteorological information systems. Where this is the case, this method may further comprise a step of receiving at the AS from at least one of said navigational and meteorological information systems notifications of incidents on earth, air and oceans, accompanied by respective geo-locations of said incidents, to determine fourth input criteria for calculations; and a step of further processing at the AS the fourth input criteria with the first, second and third input criteria to determine the number of routes from, in particular, the geo-location of the subscriber towards the at least one given destination.

On the other hand, and quite advantageously depending on the current location of the subscriber, the destination, and the time expected to arrive therein, this method may further comprise a step of indicating from the UE to the AS a number of transport media selected from: terrestrial transportation media (such as bus, taxi, private car, underground, tramp, train, etc), aerial transportation media (such as air lines, private aircraft, etc), marine transportation media (such as sea lines, rent or private ships or boats, etc), animal-powered media (such as elephants, camels, horses, etc), and combinations thereof, to determine fifth input criteria for calculations; and a step of processing at the AS the fifth input criteria with the first, second and third input criteria to determine the number of routes from the, in particular, geo-location of the subscriber towards the at least one given destination.

In order to complement this IMS service with plotting features this method may further comprise a step of configuring the AS with cartography; a step of selecting an appropriate map in the cartography to plot the geo-location of the subscriber and the at least one given destination; and a step of submitting from the AS towards the UE the appropriate map with information to plot the geo-location of the subscriber, the at least one given destination, applicable input criteria and corresponding routes on said map. In particular, appropriate new symbols are included to display any occasional incidents in the cartography that justify discarding other routes.

In accordance with a second aspect of the present invention, and in order to contributory carry out steps of the above method, there is provided an AS associated with the IMS network, the AS having: a first input unit for configuring the AS with fix parameters to determine as first input criteria at least one criterion selected from: available transport media, transport routes, transport time-tables and combinations thereof; a second input unit for receiving at the AS dynamic parameters from a plurality of transport media indicating respective incidental information, other than the one derivable from the fix parameters, to determine second input criteria for calculations; a third input unit for receiving from a UE, which is in use by a subscriber of the IMS, a message invoking activation of a route calculation service towards the AS, a location of the subscriber, and at least one given destination of the subscriber to determine third input criteria for calculations; a processing unit for processing the first, second and third input criteria to determine a number of routes from the location of the subscriber towards the at least one given destination; and an output unit for submitting from the AS towards the UE the processed number of routes.

Aligned with the above method, the location of the subscriber may, in particular, be a geo-location expressed in terms of 2D or 3D coordinates. In this AS, the third input unit may be arranged for receiving a speed vector from the UE in terms of speed modulo and speed direction, whilst the processing unit may be arranged for processing said speed vector along with the input criteria to determine the number of routes from the geo-location of the subscriber towards the at least one given destination.

Also in this AS, the second input unit may be adapted for receiving dynamic parameters with information related to events selected from: traffic jams, accidents, road reparations, rail reparations, transport medium unavailability, expectable delays, and combinations thereof; and the processing unit is adapted to determine whether or not these dynamic parameters prevent the fulfilment of the first input criteria.

In order to obtain useful information from one or more navigational or meteorological information systems, this AS may further comprise a fourth input unit for receiving from at least one of said navigational and meteorological information systems notifications of incidents on earth, air and oceans, accompanied by respective geo-locations of said incidents, to determine fourth input criteria for calculations; and the processing unit of the AS may be arranged for processing the fourth input criteria with the first, second and third input criteria to determine the number of routes from the geo-location of the subscriber towards the at least one given destination.

Advantageously aligned with the above method, the third input unit of the AS may be arranged for receiving from the UE a number of transport media selected from: terrestrial transportation media (such as bus, taxi, private car, underground, tramp, train, etc), aerial transportation media (such as air lines, private aircraft, etc), marine transportation media (such as sea lines, rent or private ships or boats, etc), animal-powered media (such as elephants, camels, horses, etc), and combinations thereof, to determine fifth input criteria for calculations; and wherein the processing unit of the AS may be arranged for processing these fifth input criteria with the first, second and third input criteria to determine the number of routes from the, in particular, geo-location of the subscriber towards the at least one given destination.

Moreover, in order to complement this IMS service with plotting features, the AS may include a fifth input unit for configuring the AS with cartography; whereas the processing unit of the AS may be arranged for selecting an appropriate map in the cartography to plot the geo-location of the subscriber and the at least one given destination; and the output unit of the AS may be arranged for submitting towards the UE the appropriate map with information to plot the geo-location of the subscriber, the at least one given destination, applicable input criteria and corresponding routes on said map.

In accordance with a third aspect of the present invention, there is provided a UE enabled to access an IMS network and to operate services thereof, the UE having: a first output unit for registering a subscriber of the IMS in the IMS network; a first input unit for receiving a confirmation that the subscriber is registered in the IMS network; a location unit arranged for determining a location of the subscriber, which in particular may be a geo-location expressed in terms of 2D or 3D coordinates, and for setting at least one given destination wanted by the subscriber; a second output unit for invoking activation of a route calculation service towards an AS associated with the IMS network, and for indicating the location of the subscriber and the at least one given destination of the subscriber as input criteria to the AS; and a second input unit for receiving from the AS a number of routes from the location of the subscriber towards the at least one given destination.

In particular, the location unit may include, or may be associated with, a Global Positioning System "GPS" for obtaining the geo-location of the subscriber. Alternatively or complementary, the location unit may be arranged for obtaining the location of the subscriber from a General Packet Radio System "GPRS" network where the UE accesses the IMS through.

Aligned with advantageous corresponding features in the above method and AS, and especially useful where the location is a geo-location, the UE may further comprise a processing unit for calculating a speed vector, which includes a speed modulo and direction representing the movement of the UE; whereas the second output unit is arranged for submitting said speed vector to the AS.

As advantageously as for the above method and AS, the UE may further comprise a third input unit for receiving from the subscriber notification of a number of transport media selected from: terrestrial transportation media, aerial transportation media, marine transportation media, animal-powered media, and combinations thereof; and the second output unit of the UE may be arranged for submitting towards the AS the selected transport media to determine further input criteria for calculations.

In order to complement the service with plotting features, the second input unit of the UE may be arranged for receiving from the AS a map with information to plot the geo-location of the subscriber, the at least one given destination, applicable input criteria and corresponding routes on said map; and the UE may further comprise a third output unit for presenting to the subscriber the map with the information plotted therein.

On the other hand, the invention may be practised by a computer program, in accordance with a fourth aspect of the invention, the computer program being loadable into an internal memory of a computer with input and output units as well as with a processing unit, and comprising executable code adapted to carry out the above method steps. In particular, this executable code may be recorded in a carrier readable in the computer. These and other objects and advantages are provided by a method, application server, user equipment and computer program according to the appended claims 1, 8, 15 and 20. Preferred embodiments are defined in the dependent claims.

### BRIEF DESCRIPTION OF THE DRAWINGS

The features, objects and advantages of the invention will become apparent by reading this description in conjunction with the accompanying drawings, in which:
FIG. 1A and FIG. 1B illustrate alternative embodiments of the sequence of actions to be followed by an AS to respectively obtain fix parameters from a Transport Media Centre either directly or indirectly through a Home Subscriber Server and to be used for the route calculation service.
FIG. 2 shows a simplified view of an exemplary sequence of actions to be followed for an AS to obtain dynamic parameters from an Incidence Centre and to be used for the route calculation service.
FIG. 3 shows a simplified view of an exemplary sequence of actions to be followed for a user to activate the route calculation service in an AS in charge of said route calculation service.
FIG. 4 shows a simplified view of an exemplary sequence of actions to be followed for a user to indicate the location of the user, a destination, and other input criteria to an AS in charge of the route calculation service.
FIG. 5 illustrates an exemplary implementation of structural components that an AS may include for providing a route calculation service.
FIG. 6 illustrates an exemplary implementation of structural components that a UE may include for using a route calculation service.
FIG. 7 shows a simplified view of an exemplary sequence of actions to be followed for a user to register in the IMS network.
FIG. 8 shows a simplified view of another exemplary sequence of actions to be followed for a user to activate the route calculation service in an AS in charge of said route calculation service.

### DETAILED DESCRIPTION

The following describes currently preferred embodiments of means and method for a route calculation service provided by an IMS network for IMS subscribers.

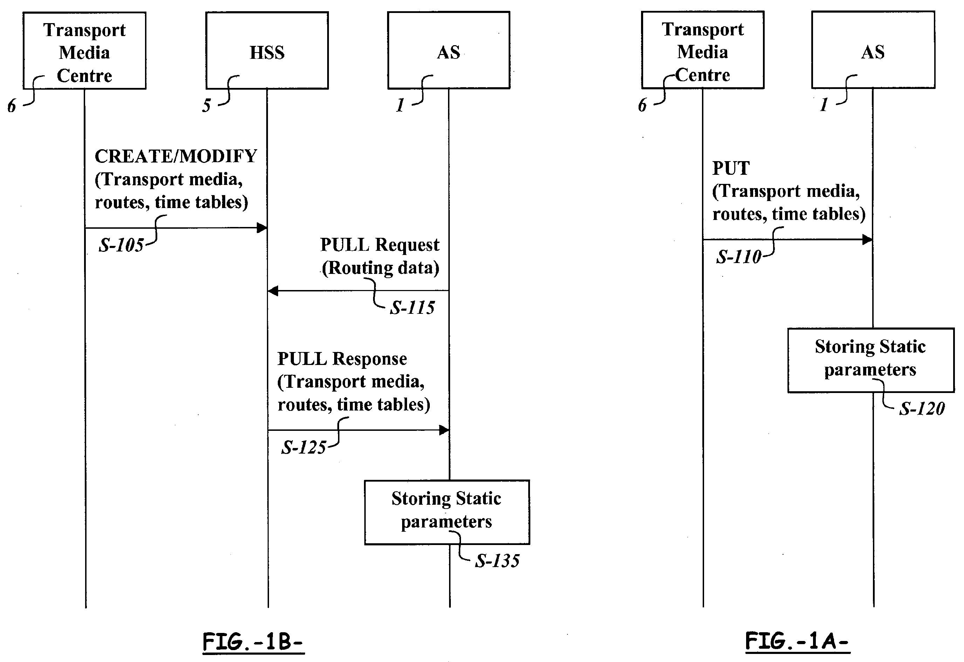

In accordance with the invention, there is provided a method of providing a subscriber of an IMS network with a route to a destination. This method includes a step of configuring an AS 1 associated with the IMS network with fix parameters to determine as first input criteria for calculations at least one criterion selected from: available transport media, transport routes, transport time-tables and combinations thereof. Fig. 1A and 1B respectively illustrate a first and second exemplary embodiment of a configuration of the AS with said fix parameters.

As illustrated in Fig. 1A, these fix parameters selectable from transport media (terrestrial, aerial or marine transport media), transport routes (Line 6 of Metro at Madrid-Spain, train 'Talgo' from Madrid-Spain to Paris-France), car renting, etc), transport time-tables (14:00-18:00, 22:00, night, a.m., etc) and combinations thereof may be submitted during a step S-110 from a Transport Media Centre 6 directly to the AS 1. In particular, the Transport Media Centre 6 may submit this information with a http PUT message of a so-called 'Ut' interface as specified in 3GPP TS 33.220 and TS 33.222.

Still with reference to Fig. 1A, the AS receiving these fix parameters, namely static parameters, which may be modified at any time but which are supposed to be stable and non-incidental or occasional, stores these fix or static parameters during a step S-120 to determine first input criteria for route calculations requested by any IMS subscriber.

Alternatively or complementary to the embodiment of Fig. 1A, especially where not every Transport Media Centre is directly connectable to the AS, the invention also provides for the embodiment of Fig. 1B whereby a Transport Media Centre 6 may keep updated a HSS of the IMS network with the static parameters explained above. As Fig. 1B illustrates, the Transport Media Centre 6 may submit during a step S-105 the static parameters towards a HSS 5 of the IMS to be stored therein and provided to the AS upon request. In particular, where both HSS and Transport Media Centre support the so-called "Lightweight Directory Access Protocol" (hereinafter LDAP) as specified in RFC 4511, the Transport Media Centre 6 might submit this information with an LDAP 'Create' or LDAP 'Modify' message towards the HSS 5.

Still with reference to Fig. 1B, the AS 1 in charge of route calculation may request during a step S-115 from the HSS 5 such static parameters, for a first time or in order to be refreshed with up-to-date information, and the HSS may provide the requested static parameters during a step S-125. Upon receipt of the static parameters at the AS 1, said static parameters are stored in the AS during a step S-135 to determine first input criteria for route calculations requested by any IMS subscriber. In particular, the AS 1 may request this information with a so-called PULL Request message, and the HSS may provide the static parameters with a corresponding PULL Response message of a so-called 'Sh' interface as specified in 3GPP TS 29.328.

This method of providing a subscriber of an IMS network with a route to a destination also includes a step of receiving at the AS dynamic parameters from a plurality of transport media indicating respective incidental information, other than the one derivable from the fix parameters, to determine second input criteria for calculations.

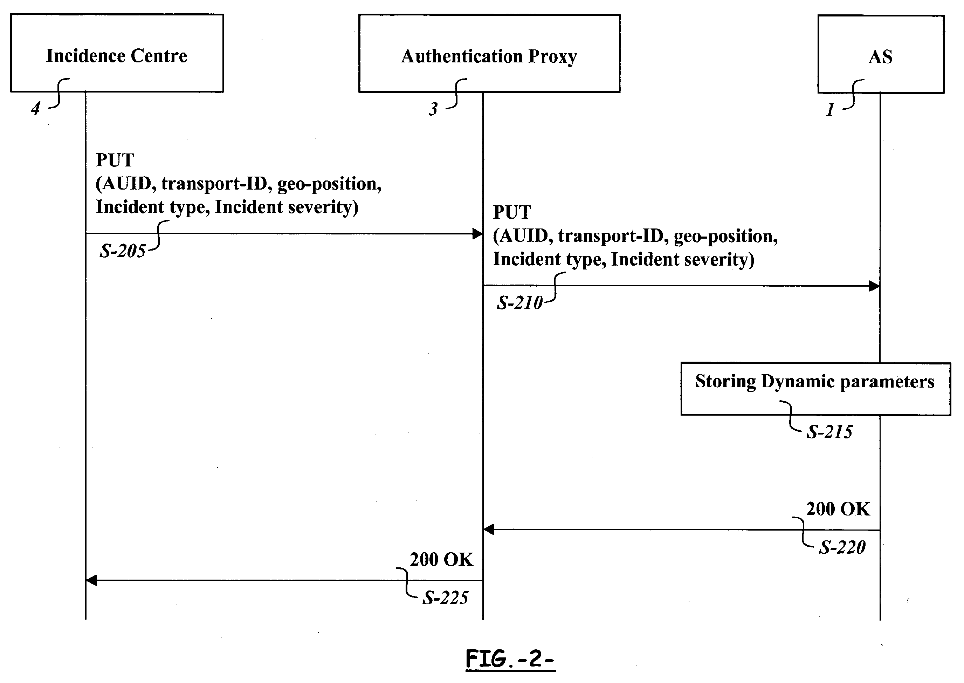

As illustrated in Fig. 2, the invention provides for an Incidence Centre 4, so called in the instant specification, which is arranged for submitting during a step S-205 towards a so-called Authentication Proxy 3 said dynamic parameters from a plurality of transport media indicating respective incidental information.

In particular, this Authentication Proxy (hereinafter AP) is enabled to handle security relations with the UE and may thus relieve the AS from this task. The AP may also be used to authenticate the UE with help of a Generic Bootstrapping Architecture, as specified in 3GPP TS 33.220 and 3GPP TS 33.222, though the mechanism for this authentication is not relevant for the purpose of the present invention. This AP is conventionally enabled to distribute the UE queries towards a dedicated AS based on the service invoked by the UE, namely, based on a so-called 'AUID'.

For the purpose of the present invention, said dynamic parameters are submitted from the Incidence Centre 4 along with an AUID value indicating Route Calculation Service, so that the AP 3 can unambiguously determine the AS 1 in charge of such service. The AP 3 thus forwards during a step S-210 the received message towards the AS 1. In particular, and following current trends in accordance with applicable technical specifications, such messages between the Incidence Centre 4 and the AP 3, as well as between the AP 3 and the AS 1, could be the so-called 'http PUT' messages, and may include additional indications identifying a particular transport medium, likely with a transport-ID, a particular geo-position where an incident has occurred, likely with 2D or 3D coordinates, a particular Incident type and/or Incident severity, others, and combinations thereof.

Upon receipt of the dynamic parameters at the AS 1, the dynamic parameters are stored in the AS during a step S-315 to determine second input criteria for route calculations requested by any IMS subscriber, and a successful response is returned to the AP 3 during a step S-220 and forwarded during a step S-225 from the latter to the Incidence Centre 4.

This method of providing a subscriber of an IMS network with a route to a destination also includes a step of invoking from a UE, the UE being in use by a subscriber of the IMS, activation of a route calculation service towards the AS.

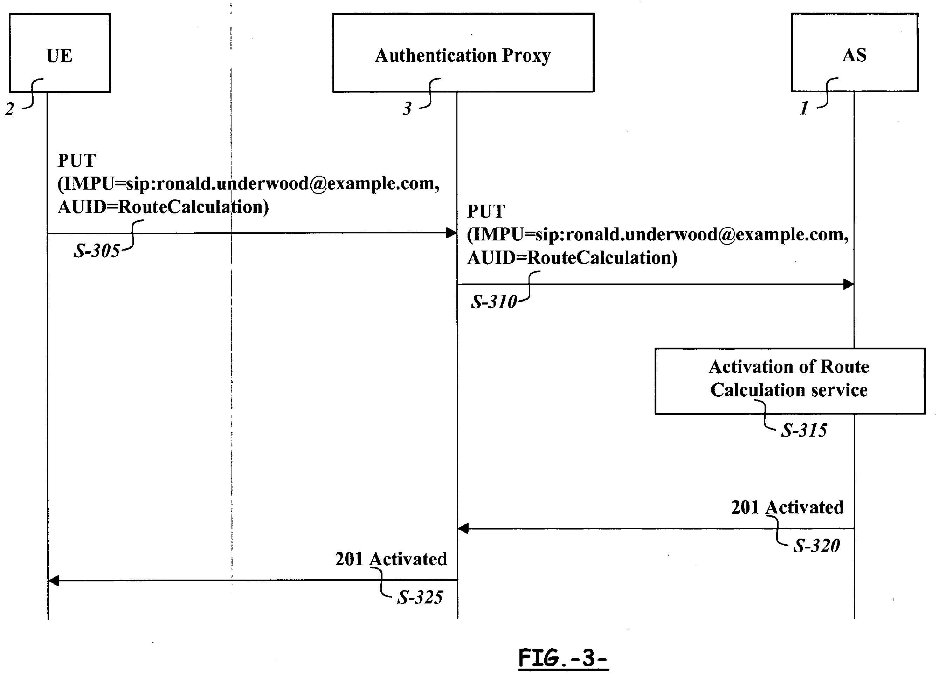

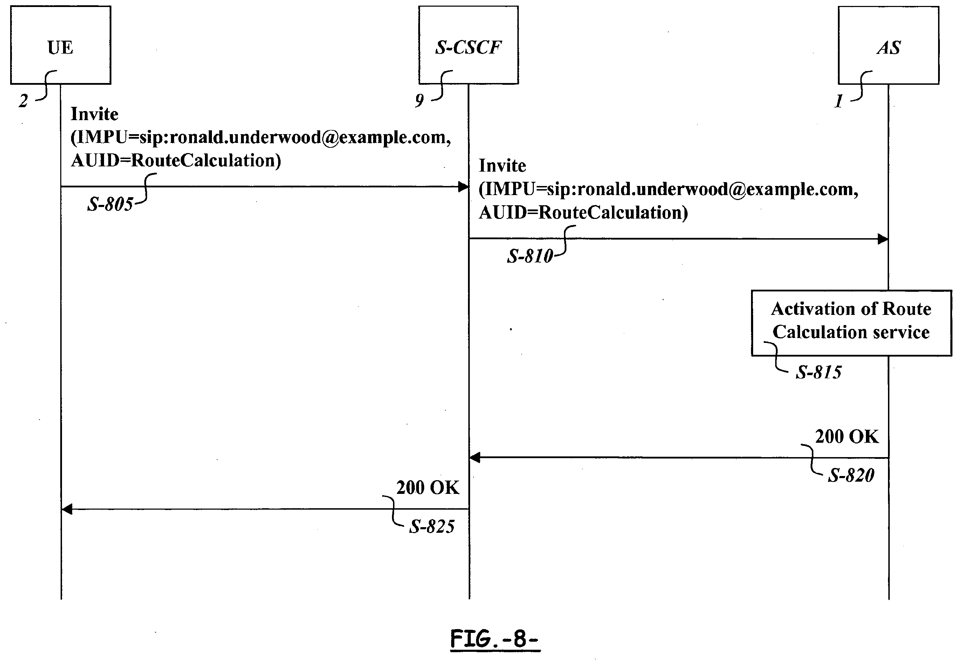

To this end, the present invention provides two alternative or complementary embodiments respectively illustrated in Fig. 3 and Fig. 8. The former makes use of a direct interface, the so-called 'Ut' interface, between the UE and the AS already commented above; whereas the latter makes use of a conventional procedure carried out through the IMS network whereby a Serving Call Session Control Function (hereinafter S-CSCF) server, which is assigned during the registration of the user with a UE for serving the user, submits the invocation of the service requested from the UE towards a dedicated AS known to the S-CSCF server.

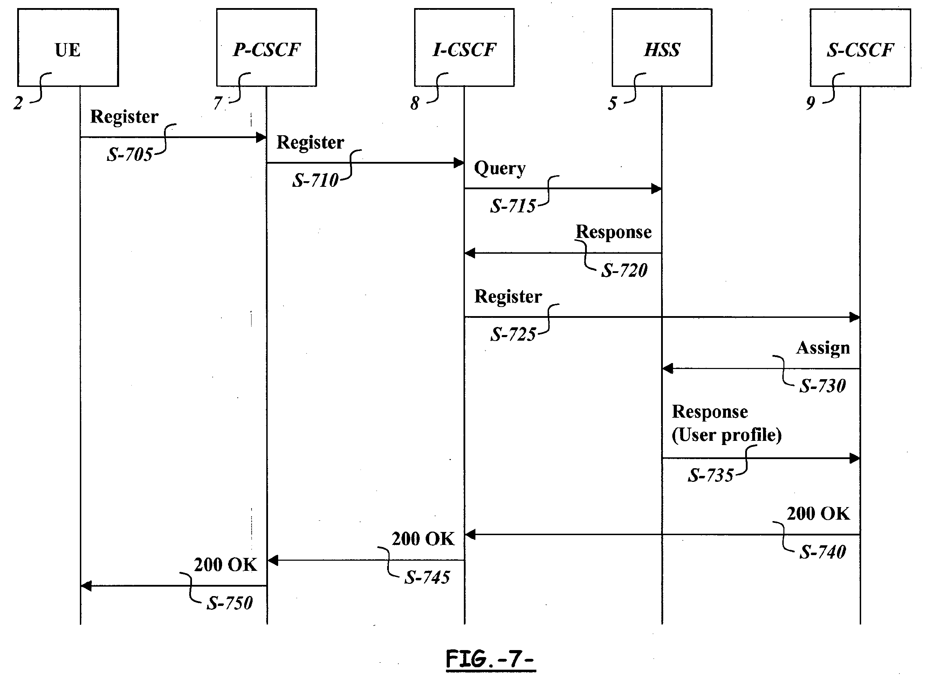

Prior to discussing these two embodiments for the activation of the route calculation service at the AS, the registration of a user with a UE 2 is discussed in the following with reference to Fig. 7.

As Fig. 7 shows, a user with a UE 2 can register one or more pairs of IMS public user identity (hereinafter IMPU) and IMS private user identity (hereinafter IMPI) for identification purposes into the IMS network where the user holds a subscription with a 'Register' message submitted during a step S-705 from the UE to a Proxy Call Session Control Function (hereinafter P-CSCF) server 7, which is an entry point to the IMS network.

This P-CSCF server forwards during a step S-710 the 'Register' message received from the UE 2 towards an Interrogating Call Session Control Function (hereinafter I-CSCF) server 8, which is in charge of selecting a S-CSCF server having the capabilities required for serving the user in the IMS.

This I-CSCF server queries during a step S-715 a HSS 5, which holds subscription data for the user in the IMS network, about a S-CSCF server already assigned for serving the user or about the capabilities that a selectable S-CSCF server should have for serving said user.

The HSS 5 returns during a step S-720 a response towards the I-CSCF 8 indicating either a S-CSCF server previously assigned for serving the user, if a previous registration of one or more IMPI/IMPU pairs had taken place, or the capabilities required for a S-CSCF server to be selected.

The I-CSCF 8, depending on the information received from the HSS 5, determines a suitable S-CSCF server 9 for serving the user, and forwards during a step S-725 the 'Register' message received from the P-CSCF 7 towards the S-CSCF 9.

The S-CSCF server 9 receiving the registration of the user with UE 2 informs during a step S-730 to the HSS 5 of having been assigned for serving the user, and the HSS submits as response during a step S-735 a user profile with data necessary for serving the user at the S-CSCF server. Then, the S-CSCF server returns back during a step S-740 to the I-CSCF server 8 a successful result code, the I-CSCF server submits during a step S-745 such successful result code to the P-CSCF server 7, and the latter forwards during a step S-750 the successful result code to the UE 2.

After having discussed above the registration of the user with reference to Fig. 7, the exemplary embodiments illustrated with reference to Fig. 3 and Fig. 8 for activation of the route calculation service are discussed in the following.

Fig. 3 illustrates a first exemplary embodiment of a user with a UE 2 invoking the activation of the route calculation service though the so-called 'Ut' interface towards the AS 1 in charge of such service. To this end, and in accordance with general procedures specified in 3GPP TS 33.222 V8.0.0, the UE submits towards the Authentication Proxy 3 an http PUT message to invoke a particular service. This AP 3, which operates as a HTTP Proxy, distributes the UE queries towards the concerned AS based on the service invoked by the UE. For the purpose of the present invention, this PUT message is submitted during a step S-305 and includes a user identifier, such as and IMPU, and a new AUID indicating 'Route Calculation Service' so that the AP 3 can determine an AS 1 in charge of this service. The AP forwards during a step S-310 the received PUT message to the AS 1 with the AUID and the user identifier.

Still with reference to Fig. 3, the AS 1 activates during a step S-315 the route calculation service for the indicated user, identified by the given user identifier, and returns during a step S-320 an activation result back to the AP, which in turn, forwards during a step S-325 the activation result to the UE 2. In particular, and depending on security requirements that the AS and the AP might have been configured with, the AS, the AP, or both may check whether the user had already been registered in the IMS network and the AP may carry out a particular authentication of the user following the teaching in the above 3GPP TS 33.222 V8.0.0.

Fig. 8 illustrates a second exemplary embodiment of a user with a UE 2 invoking the activation of the route calculation service though the IMS network where the user holds a subscription, and where the user has been registered following the procedure described above with reference to Fig. 7. As illustrated in Fig. 8, the UE 2 submits during a step S-805 an 'Invite' message towards the S-CSCF 9 assigned for serving the user during the registration procedure. For the purpose of the present invention, this 'Invite' message includes an identifier of the user, such as the IMPU, and an identifier of the service to be invoked, such as the above AUID indicating 'Route Calculation Service'. In order to identify the service to be invoked, the invention also provides for making use of the so-called Public Service Identity (hereinafter PSI), which is generally available to identify a service in the IMS, by registering such new PSI so that the S-CSCF may unambiguously determine the AS in charge of the service identified by said PSI.

Still with reference to Fig. 8, the S-CSCF 9 receiving such message determines the AS 1 in charge of the service and forwards during a step S-810 the 'Invite' message to said AS 1. The AS 1 activates during a step S-815 the route calculation service for the indicated user, identified by the given user identifier, and returns during a step S-820 the activation result back to the S-CSCF 9, result which in particular may be a so-called '200-OK' message, and the S-CSCF forwards during a step S-825 this activation result to the UE 2.

This method of providing a subscriber of an IMS network with a route to a destination also includes a step of indicating to the AS a location of the subscriber and at least one given destination of the subscriber to determine third input criteria for calculations. In particular, the location of the subscriber may be obtained from a GPS associated with the UE 2, or may be obtained from network infrastructure such as a GPRS location. More particularly, for instance where the location is obtained from a GPS associated with the UE, this location may be indicated as a geo-location in 2D coordinates, such as latitude and longitude, or in 3D coordinates as a conventional GPS is enabled to provide.

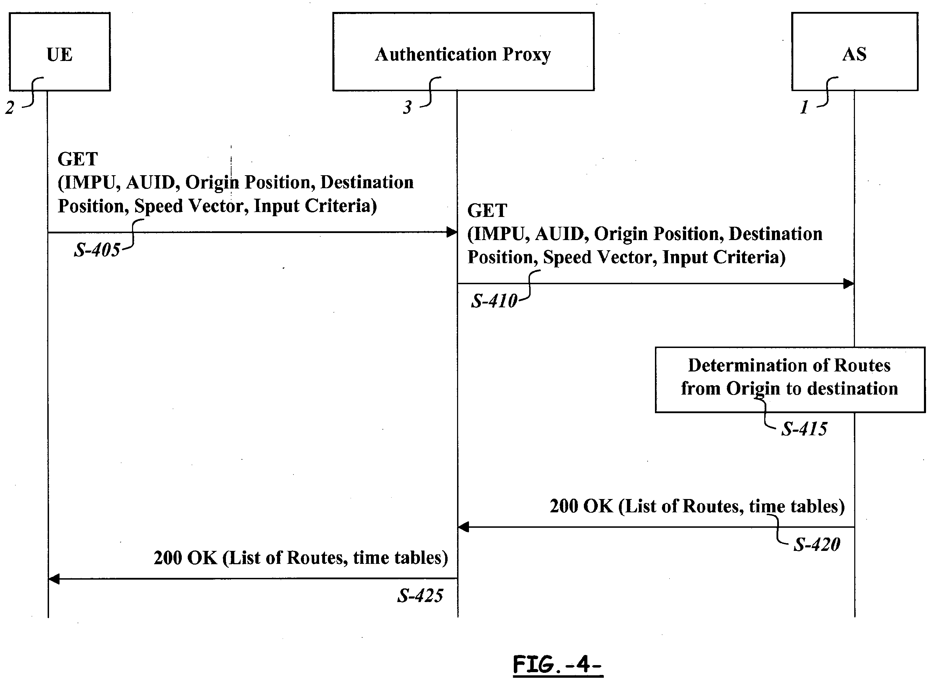

To this end, the present invention also provides two alternative or complementary embodiments as those already described above with reference to Fig. 3 and Fig. 8. As in the previous case, a first embodiment illustrated in Fig. 4 makes use of the direct 'Ut' interface between the UE and the AS already commented above; whereas the second embodiment, which is not illustrated in any drawing, makes use of a conventional procedure carried out through the IMS network whereby a Serving Call Session Control Function (hereinafter S-CSCF) server, which is assigned during the registration of the user with a UE for serving the user, submits the submissions from the UE towards a dedicated AS known to the S-CSCF server. It is believed that the skilled person will not have any difficulty on applying the teaching described below for the first embodiment with reference to Fig. 4 to develop an equivalent procedure for the second embodiment in view of the comparison between Figs. 3, 4 and 8.

As illustrated in Fig. 4, the UE 2 submits to the AP 3 during a step S-405 a GET message including and identifier of the user, particularly an IMPU, an identifier of the route calculation service, which in particular may be a PSI or an AUID, a location of the subscriber and at least one given destination for which the subscriber desires to find one or more possible routes. The AP 3 receiving the GET message forwards it during a step S-410 towards the AS 1.

Alternatively, for the second embodiment where the conventional procedure through the IMS network applies, an 'Invite' message with equivalent contents as the GET message may be sent from the UE 2 to the S-CSCF 9 and forwarded from the latter to the AS 1.

The method of providing a subscriber of an IMS network with a route to a destination continues with a step of processing at the AS the first, second and third input criteria to determine a number of routes from the location of the subscriber towards the at least one given destination. To this end and still with reference to Fig. 4, the AS 1 determines during a step S-415 a number of routes from the origin position, namely the subscriber location, to the at least one given destination.

Once the number of routes has been determined, the method includes a step of submitting from the AS towards the UE the processed number of routes. To this end and still with reference to Fig. 4 the AS 1 submits during a step S-420 a successful result towards the AP 3 including the number of routes calculated from the origin to the destination, likely including additional relevant information such as time-tables of the different transport media involved in each route to facilitate the user choice. The AP 3 receiving the successful result with number of routes and additional information forwards during a step S-425 such message and the included information towards the UE 2. Likewise, where the second embodiment not illustrated in any drawing applies, the successful result is submitted to the S-CSCF 9 and forwarded from the latter to the UE 2.

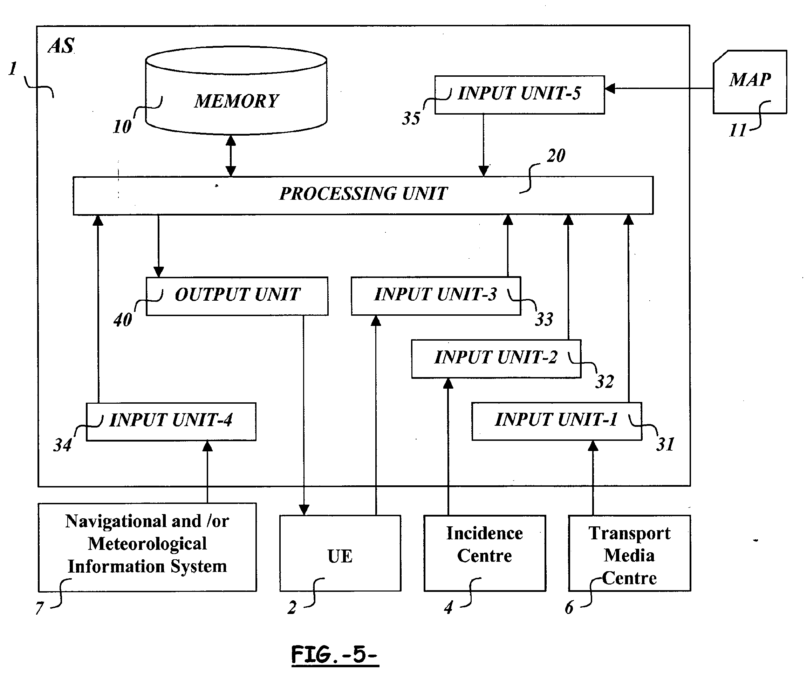

In order to carry out the above method, there is provided an AS 1 associated with an IMS network and basically illustrated in Fig. 5.

As Fig. 5 illustrates, this AS includes a first input unit 31 for configuring the AS with fix parameters to determine as first input criteria at least one criterion selected from: available transport media, transport routes, transport time-tables and combinations thereof. In particular, this first input unit is connectable with a Transport Media Centre 6 adapted for submitting to the AS the fix or static parameters.

Still with reference to Fig. 5, this AS also includes a second input unit 32 for receiving at the AS dynamic parameters from a plurality of transport media indicating respective incidental information, other than the one derivable from the fix parameters, to determine second input criteria for calculations. The incidental information may be collected from at least one centralized Incidence Centre 4, processed therein to obtain the dynamic parameters and submitted towards the AS wherein they are received in the second output unit 32.

Still with reference to Fig. 5, this AS also includes a third input unit 33 for receiving from a UE, the UE being in use by a subscriber of the IMS, a message invoking activation of a route calculation service towards the AS, a location of the subscriber, and at least one given destination of the subscriber to determine third input criteria for calculations. In particular, the third input unit 33 is adapted for receiving the location of the subscriber as a geo-location expressed as 2D coordinates, such as latitude and longitude, or as 3D coordinates, as a conventional GPS is enabled to provide.

Still with reference to Fig. 5, this AS also includes a processing unit 20 for processing the first, second and third input criteria to determine a number of routes from the location of the subscriber towards the at least one given destination. If required, and especially where the time required to arrive at the destination is long enough to justify that the subscriber might be periodically notified of any changes, the input criteria may be temporary saved in an internal memory 10, or database. This processing unit is connected with the first, second and third input units to respectively receive data received therein. In particular, said first, second and third input units may be provided as separate modules or as an integral input unit connectable with the Transport Media Centre 6, the Incidence Centre 4 and the UE 2.

Still with reference to Fig. 5, this AS also includes an output unit 40 for submitting from the AS 1 towards the UE 2 the processed number of routes. This output unit is connected with the processing unit 20 and receives the number of routes determined therein. In particular, this output unit 40 may be adapted to periodically notify the UE 2 with updates and additional information processed by, and received from, the processing unit 20.

Cooperating with the above AS and in order to carry out the above method, there is provided a UE 2 enabled to access an IMS network and to operate services thereof.

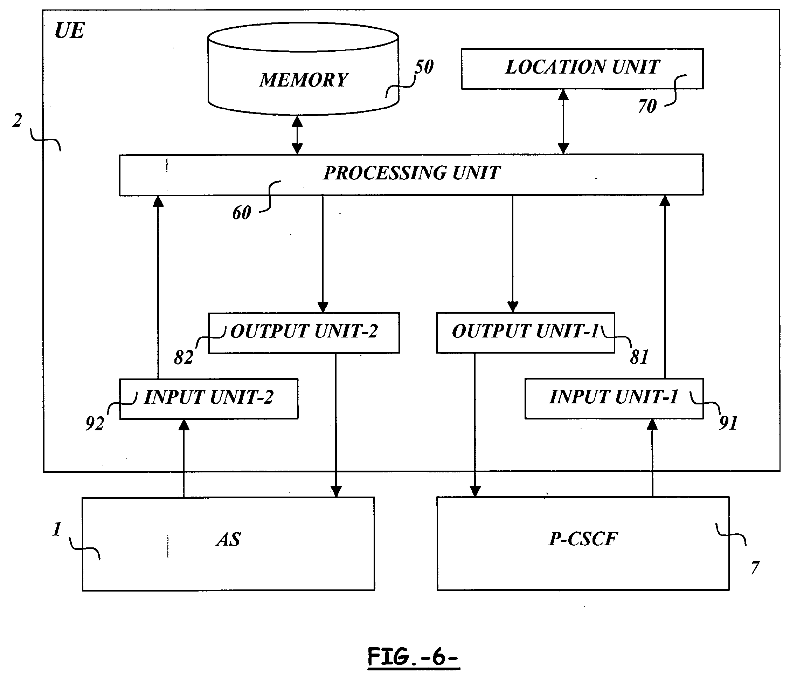

As illustrated in Fig 6, this UE includes a first output unit 81 for registering a subscriber of the IMS in the IMS network and a first input unit 91 for receiving a confirmation that the subscriber is registered in the IMS network. In this respect, where the subscriber of the IMS invokes the route calculation service following a conventional procedure for invoking services through the IMS network, that is, carrying out a registration of a subscriber IMPI/IMPU pair, being assigned a S-CSCF for serving the subscriber, invoking the service towards the S-CSCF, and the latter assigning a dedicated AS and forwarding the invocation towards said AS, the subscriber has previously been registered into the IMS network. This assumption is not necessarily required where the subscriber carries out the invocation through the 'Ut' interface as explained above.

Still with reference to Fig. 6, the UE 2 also includes a location unit 70 arranged for determining a location of the subscriber and for setting at least one given destination wanted by the subscriber. In particular, the location unit 70 may be adapted for determining the location of the subscriber as a geo-location expressed as 2D coordinates, such as latitude and longitude, or as 3D coordinates, as a conventional GPS is enabled to provide. More particularly, the location unit 70 may include, or be associated with, a GPS for obtaining the geo-location of the subscriber. Alternatively or complementary, the location unit 70 may be arranged for obtaining the location of the subscriber from a GPRS network where the UE has accessed the IMS through.

Still with reference to Fig. 6, the UE 2 also includes a second output unit 82 for invoking activation of a route calculation service towards an AS 1 associated with the IMS network, and for indicating the location of the subscriber and the at least one given destination of the subscriber as input criteria to the AS; and a second input unit 92 for receiving from the AS a number of routes from the location of the subscriber towards the at least one given destination.

In this respect, the second output unit 82 and second input unit 92 may be provided as integral output unit and input unit with the first output unit 81 and first input unit 91, where the subscriber of the IMS invokes the route calculation service following a conventional procedure for invoking services through the IMS network; and the second output unit 82 and second input unit 92 may be separate from the first output unit 81 and first input unit 91, where the invocation of the route calculation service is carried out with the 'Ut' interface directly or through the AP 3, as exemplary illustrated in Fig. 3. Even if the communications between the UE 2 and the AS 1 are carried out through the AP 3 where the 'Ut' interface is used, the AP 3 has been omitted in Fig. 6 for the sake of simplicity.

Back to the above method of providing a subscriber of an IMS network with a route to a destination, the dynamic parameters received during a step S-205, and collected from each transport medium, may include information related to events selected from: traffic jams, accidents, road reparations, rail reparations, transport medium unavailability, expectable delays, and combinations thereof. Particularly in this method, the step of receiving at the AS the dynamic parameters may thus include a step of collecting at an Incidence Centre 4 from each transport medium the respective incidental information, and a step of submitting from the Incidence Centre 4 the respective incidental information towards the AS. To this end, the second input unit 32 of the AS 1 is adapted for receiving from the Incidence Centre 4 dynamic parameters including information related to events selected from: traffic jams, accidents, road reparations, rail reparations, transport medium unavailability, expectable delays, and combinations thereof. Moreover, the processing unit 20 of the AS 1 may advantageously be adapted to determine whether or not these dynamic parameters prevent the fulfilment of the first input criteria.

Aligned with capabilities of the above UE 2, the step of indicating from the UE to the AS the location of the subscriber may include a step of obtaining said location from a GPRS network where the subscriber has accessed the IMS network through, or as a geo-location expressed as 2D or 3D coordinates and obtained from a GPS associated with the UE 2.

Advantageously in this method, in order to determine whether all candidate routes are still valid and especially where many possibilities are possible in the area where the subscriber is located, the step of indicating from the UE to the AS the geo-location of the subscriber, likely in terms of 2D or 3D coordinates, may include a step of calculating at the UE a speed vector including a speed modulo and direction of the UE, and a step of indicating said speed vector to the AS. In particular, this speed vector may be submitted during steps S-405 and S-410 from the UE towards the AS, along with other input criteria such as update notifications in the case of long distance trips. To this end, the third input unit 33 of the AS 1 may be arranged for receiving the speed vector from the UE in terms of speed modulo and speed direction, and the processing unit 20 may be arranged for processing said speed vector along with the input criteria to determine the number of routes from the geo-location of the subscriber towards the at least one given destination. Also to this end, the UE 2 may further comprise a processing unit 60 for calculating the speed vector, which includes a speed modulo and direction representing the movement of the UE; and the second output unit 82 of the UE 2 may be arranged for submitting said speed vector to the AS 1.

Apart from the above features, the method may be enhanced with an additional step, not illustrated in any drawing, of receiving at the AS 1 from at least one of navigational and meteorological information systems notifications of incidents on earth, air and oceans, accompanied by respective geo-locations of said incidents, to determine fourth input criteria for calculations; and a step of further processing at the AS the fourth input criteria with the first, second and third input criteria to determine the number of routes from the geo-location of the subscriber towards the at least one given destination. To this end, the AS 1 may further comprise a fourth input unit 34 for receiving from at least one of navigational and meteorological information systems 7 notifications of incidents on earth, air and oceans, accompanied by respective geo-locations of said incidents, to determine fourth input criteria for calculations; and the processing unit 20 of the AS, which is connected with said fourth input unit 34, may be arranged for processing the fourth input criteria with the first, second and third input criteria to determine the number of routes from the geo-location of the subscriber towards the at least one given destination.

In order to offer the IMS subscriber the possibility to customize this service, for example, the selection of one or more transport media to consider for route calculations, or to avoid for route calculations, the method may further include a step of indicating from the UE 2 to the AS 1 a number of transport media selected from: terrestrial transportation media, aerial transportation media, marine transportation media, animal-powered media, and combinations thereof, to determine fifth input criteria for calculations; and a step of processing at the AS 1 these fifth input criteria with the first, second and third input criteria to determine the number of routes from the geo-location of the subscriber towards the at least one given destination. Of course, the step of processing the fifth input criteria may include the above optional fourth input criteria as well, since both fourth and fifth input criteria may be complementary to each other. To this end, the third input unit 33 of the AS 1 may be arranged for receiving from the UE 2 a number of transport media selected from: terrestrial transportation media, aerial transportation media, marine transportation media, animal-powered media, and combinations thereof, to determine fifth input criteria for calculations; and the processing unit 20 of the AS 1 may be arranged for processing the fifth input criteria with the first, second and third input criteria, as well as with the fourth input criteria, if available, to determine the number of routes from the location of the subscriber towards the at least one given destination. Also to this end, the UE 2 may further comprise a third input unit not illustrated in any drawing, which in particular may be implemented with key buttons or menus, for receiving from the subscriber notification of a number of transport media selected from: terrestrial transportation media, aerial transportation media, marine transportation media, animal-powered media, and combinations thereof; and the second output unit 82 of the UE 2 may be arranged for submitting towards the AS 1 the selected transport media to determine further input criteria for calculations. Advantageously, the UE 2 may also include an internal memory 50, connected with the processing unit 60 wherein the selected transport media, amongst other data, can be saved at least whilst the service is active.

Moreover, in order to provide users of this service with comparable plotting facilities as other dedicated GPS units available in the market, the method of providing a subscriber of an IMS network with a route to a destination may further comprise a step of configuring the AS 1 with cartography; a step of selecting an appropriate map in the cartography to plot the location of the subscriber and the at least one given destination; and a step of submitting from the AS towards the UE the appropriate map with information to plot the location of the subscriber, the at least one given destination, applicable input criteria and corresponding routes on said map. To this end, the AS 1 may further comprise a fifth input unit 35, as illustrated in Fig. 5, for configuring the AS with cartography 11, which may be configured for reading conventional Map cartridges as well as other dedicated maps; the processing unit 20 of the AS 1 may be arranged for selecting an appropriate map in the cartography to plot the geo-location of the subscriber and the at least one given destination; and the output unit 40 of the AS 1 may be arranged for submitting towards the UE 2 the appropriate map with information to plot the geo-location of the subscriber, the at least one given destination, applicable input criteria and corresponding routes on said map. Also to this end, the second input unit 92 of the UE 2 may be arranged for receiving from the AS 1 a map with information to plot the geo-location of the subscriber, the at least one given destination, applicable input criteria and corresponding routes on said map; and the UE 2 may further comprise a third output unit not illustrated in any drawing, which in particular may be a scrollable display, for presenting to the subscriber the map with the information plotted therein.

The invention may also be practised by a computer program, loadable into an internal memory of a computer with input and output units as well as with a processing unit. This computer program comprises to this end executable code adapted to carry out the above method steps when running in the computer. In particular, the executable code may be recorded in a carrier readable means in a computer.

The invention is described above in connection with various embodiments that are intended to be illustrative and non-restrictive. It is expected that those of ordinary skill in this art may modify these embodiments. The scope of the invention is defined by the claims in conjunction with the description and drawings, and all modifications that fall within the scope of the claims are intended to be included therein.

## Claims

1. A method of providing a subscriber of an IP Multimedia Subsystem "IMS" network with a route to a destination, the method comprising the steps of:
- configuring (S-120, S-135) an application server "AS" (1) associated with the IMS network with fix parameters to determine as first input criteria for calculations at least one criterion selected from: available transport media, transport routes, transport time-tables and combinations thereof;
- receiving (S-205, S-210) at the AS (1) dynamic parameters from a plurality of transport media indicating respective incidental information, other than the one derivable from the fix parameters, the incidental information received per transport medium and related to events selected from: traffic jams, accidents, road reparations, rail reparations, transport medium unavailability, expectable delays, and combinations thereof, to determine second input criteria for calculations;
- invoking (S-305, S-805) from a user equipment "UE", the UE (2) being in use by a subscriber of the IMS, activation of a route calculation service towards the AS;
- indicating (S-405) from the UE (2) to the AS (1) a location of the subscriber and at least one given destination of the subscriber to determine third input criteria for calculations;
- processing (S-415) at the AS (1) the first, second and third input criteria to determine a number of routes from the location of the subscriber towards the at least one given destination; and
- submitting (S-420) from the AS (1) towards the UE (2) the processed number of routes.

2. The method of claim 1, wherein the location of the subscriber is indicated as a geo-location in 2-dimension or 3-dimension coordinates.

3. The method of claim 1, wherein the step of receiving at the AS (1) the dynamic parameters includes a step of collecting at an Incidence Centre (4) from each transport medium the respective incidental information, and a step of submitting from the Incidence Centre the respective incidental information towards the AS.

4. The method of claim 2, wherein the step of indicating from the UE (2) to the AS (1) the geo-location of the subscriber includes a step of calculating at the UE a speed vector including a speed modulo and direction of the UE, and a step of indicating said speed vector to the AS.

5. The method of claim 1, further comprising a step of receiving at the AS (1) from at least one of navigational and meteorological information systems (7) notifications of incidents on earth, air and oceans, accompanied by respective geo-locations of said incidents, to determine fourth input criteria for calculations; and a step of further processing at the AS the fourth input criteria with the first, second and third input criteria to determine the number of routes from the geo-location of the subscriber towards the at least one given destination.

6. The method of claim 1, further comprising a step of indicating from the UE to the AS a number of transport media selected from: terrestrial transportation media, aerial transportation media, marine transportation media, animal-powered media, and combinations thereof, to determine fifth input criteria for calculations; and a step of processing at the AS the fifth input criteria with the first, second and third input criteria to determine the number of routes from the geo-location of the subscriber towards the at least one given destination.

7. The method of claim 1, further comprising a step of configuring the AS with cartography; a step of selecting an appropriate map in the cartography to plot the location of the subscriber and the at least one given destination; and a step of submitting from the AS towards the UE the appropriate map with information to plot the location of the subscriber, the at least one given destination, applicable input criteria and corresponding routes on said map.

8. An application server "AS" (1) associated with an IP Multimedia Subsystem "IMS" network, the AS having:
- a first input unit (31) for configuring the AS with fix parameters to determine as first input criteria at least one criterion selected from: available transport media, transport routes, transport time-tables and combinations thereof;
- a second input unit (32) for receiving at the AS dynamic parameters from a plurality of transport media indicating respective incidental information, other than the one derivable from the fix parameters, the incidental information received per transport medium and related to events selected from: traffic jams, accidents, road reparations, rail reparations, transport medium unavailability, expectable delays, and combinations thereof, to determine second input criteria for calculations;
- a third input unit (33) for receiving from a user equipment "UE", the UE (2) being in use by a subscriber of the IMS, a message invoking activation of a route calculation service towards the AS, a location of the subscriber, and at least one given destination of the subscriber to determine third input criteria for calculations;
- a processing unit (20) for processing the first, second and third input criteria to determine a number of routes from the location of the subscriber towards the at least one given destination; and
- an output unit (40) for submitting from the AS (1) towards the UE (2) the processed number of routes.

9. The AS of claim 8, wherein the location of the subscriber is indicated as a geo-location in 2-dimension or 3-dimension coordinates.

10. The AS of claim 8, wherein the processing unit (20) is adapted to determine whether or not these dynamic parameters prevent the fulfilment of the first input criteria.

11. The AS of claim 9, wherein the third input unit (33) is arranged for receiving a speed vector from the UE (2) in terms of speed modulo and speed direction, and wherein the processing unit (20) is arranged for processing said speed vector along with the input criteria to determine the number of routes from the geo-location of the subscriber towards the at least one given destination.

12. The AS of claim 8, further comprising a fourth input unit (34) for receiving from at least one of navigational and meteorological information systems (7) notifications of incidents on earth, air and oceans, accompanied by respective geo-locations of said incidents, to determine fourth input criteria for calculations; and wherein the processing unit is arranged for processing the fourth input criteria with the first, second and third input criteria to determine the number of routes from the geo-location of the subscriber towards the at least one given destination.

13. The AS of claim 8, wherein the third input unit (33) is arranged for receiving from the UE (2) a number of transport media selected from: terrestrial transportation media, aerial transportation media, marine transportation media, animal-powered media, and combinations thereof, to determine fifth input criteria for calculations; and wherein the processing unit (20) is arranged for processing the fifth input criteria with the first, second and third input criteria to determine the number of routes from the location of the subscriber towards the at least one given destination.

14. The AS of claim 9, further comprising a fifth input unit (35) for configuring the AS with cartography; wherein the processing unit (20) is arranged for selecting an appropriate map in the cartography to plot the geo-location of the subscriber and the at least one given destination; and wherein the output unit (40) is arranged for submitting towards the UE the appropriate map with information to plot the geo-location of the subscriber, the at least one given destination, applicable input criteria and corresponding routes on said map.

15. A user equipment "UE" (2) enabled to access an IP Multimedia Subsystem "IMS" network and to operate services thereof, the UE having:
- a first output unit (81) for registering a subscriber of the IMS in the IMS network;
- a first input unit (91) for receiving a confirmation that the subscriber is registered in the IMS network;
- a location unit (70) arranged for determining a location of the subscriber and for setting at least one given destination wanted by the subscriber;
- a second output unit (82) for invoking activation of a route calculation service towards an application server "AS" (1) associated with the IMS network, and for indicating the location of the subscriber and the at least one given destination of the subscriber as input criteria to the AS; and
- a second input unit (92) for receiving from the AS a number of routes from the location of the subscriber towards the at least one given destination.

16. The UE of claim 15, wherein the location of the subscriber is indicated as a geo-location in 2-dimension or 3-dimension coordinates.

17. The UE of claim 16, further comprising:
- a processing unit (60) for calculating a speed vector, which includes a speed modulo and direction representing the movement of the UE (2); and wherein
- the second output unit (82) is arranged for submitting said speed vector to the AS.

18. The UE of claim 15, further comprising a third input unit for receiving from the subscriber notification of a number of transport media selected from: terrestrial transportation media, aerial transportation media, marine transportation media, animal-powered media, and combinations thereof; and wherein the second output unit (82) is arranged for submitting towards the AS the selected transport media to determine further input criteria for calculations.

19. The UE of claim 16, wherein the second input unit (92) is arranged for receiving from the AS (1) a map with information to plot the geo-location of the subscriber, the at least one given destination, applicable input criteria and corresponding routes on said map; and the UE further comprises a third output unit for presenting to the subscriber the map with the information plotted therein.

20. A computer program, loadable into an internal memory of a computer with input and output units as well as with a processing unit, the computer program comprising executable code adapted to carry out the method steps according to any of claims 1 to 7 when running in the computer.

21. The computer program of claim 20, wherein the executable code is recorded in a carrier readable in a computer.

## Patentansprüche

1. Verfahren zur Versorgung eines Nutzers eines IP-Multimedia-Subsystem,IMS,-Netzwerks mit einer Ziel-Route, wobei das Verfahren die Schritte aufweist:
- Konfigurieren (S-120, S-135) eines Applikations-Servers, AS, (1), der mit dem IMS-Netzwerk verknüpft ist, mit festen Parametern zur Bestimmung als erste Eingangskriterien für Berechnungen mindestens eines Kriteriums, welches ausgewählt ist aus: verfügbaren Transportmedien, Transportrouten, Transport-Zeitplänen und Kombinationen hieraus;
- Empfangen (S-205, S-210) am AS (1) von dynamischen Parametern aus einer Mehrzahl von Transportmedien, die jeweilige Nebeninformation, anders als die aus den festen Parametern ableitbare, angeben, wobei die Nebeninformation über ein Transportmedium empfangen wird und sich auf Ereignisse bezieht, die ausgewählt sind aus: Verkehrsstaus, Unfällen, Straßeninstandsetzungen, Schieneninstandsetzungen, Transportmedien-Unverfügbarkeit, erwartbaren Verzögerungen und Kombinationen hieraus, um zweite Eingangskriterien für Berechnungen zu bestimmen;
- Aufrufen (S-305, S-805) von einer Nutzereinheit, UE, wobei die UE (2) durch einen Nutzer des IMS in Gebrauch ist, der Aktivierung eines Routenberechnungsdienstes zum AS;
- Angeben (S-405) vom UE (2) an den AS (1) einer Position eines Nutzers und mindestens eines gegebenen Ziels des Nutzers, um dritte Eingangskriterien für Berechnungen zu bestimmen;
- Verarbeiten (S-415) am AS (1) der ersten, zweiten und dritten Eingangskriterien zur Bestimmung einer Anzahl von Routen von dem Ort des Nutzers zum mindestens einen gegebenen Ziel hin; und
- Liefern (S-420) der verarbeiteten Anzahl von Routen vom AS (1) zur UE (2).

2. Verfahren nach Anspruch 1, wobei die Position des Nutzers als Geoposition in 2-dimensionalen oder 3-dimensionalen Koordinaten angegeben wird.

3. Verfahren nach Anspruch 1, wobei der Schritt des Empfangens der dynamischen Parameter am AS (1) einen Schritt des Sammelns der jeweiligen Nebeninformation an einem Ereigniszentrum (4) von jedem Transportmedium und einen Schritt des Lieferns der jeweiligen Nebeninformation vom Ereigniszentrum an den AS einschließt.

4. Verfahren nach Anspruch 2, wobei der Schritt des Angebens der Geoposition des Nutzers von der UE (2) an den AS (1) einen Schritt des Berechnens eines Geschwindigkeitsvektors, einschließlich eines Geschwindigkeitsbetrages und einer Richtung der UE, an der UE und einen Schritt des Angebens des Geschwindigkeitsvektors an den AS einschließt.

5. Verfahren nach Anspruch 1, weiter aufweisend einen Schritt des Empfangens am AS (1) von mindestens einem von Navigations- und meteorologischen Informationssystemen (7) von Ereignismitteilungen betreffend den Boden, die Luft und Ozeane, begleitet von entsprechend Geopositionen der Ereignisse, um vierte Eingangskriterien für Berechnungen zu bestimmen, und einen Schritt einer weiteren Verarbeitung am AS der vierten Eingangskriterien mit den ersten, zweiten und dritten Eingangskriterien, um die Anzahl von Routen zu mindestens einem gegebenen Ziel aus den Geopositionen der Nutzer zu bestimmen.

6. Verfahren nach Anspruch 1, weiter aufweisend einen Schritt des Angebens von der UE an den AS einer Anzahl von Transportmedien, die ausgewählt sind aus: erdgebundenen Transportmedien, Lufttransportmedien, Seetransportmedien, zugtiergetriebenen Medien und Kombinationen hieraus, um fünfte Eingangskriterien für Berechnungen zu bestimmen, und einen Schritt des Verarbeitens am AS der fünften Eingangskriterien mit den ersten, zweiten und dritten Eingangskriterien, um die Anzahl der Routen zu mindestens einem gegebenen Ziel aus der Geoposition der Nutzer zu bestimmen.

7. Verfahren nach Anspruch 1, weiter aufweisend einen Schritt des Konfigurierens des AS mit Kartographie, einen Schritt des Auswählens einer geeigneten Karte in der Kartographie, um die Position des Nutzers und des mindestens einen gegebenen Ziels darzustellen, und einen Schritt des Lieferns vom AS an die UE der geeigneten Karte mit Information zum Darstellen der Position des Nutzers, des mindestens einen gegebenen Ziels, der anwendbaren Eingangskriterien und der entsprechenden Routen auf der Karte.

8. Applikations-Server, AS, (1), der mit einem IP-Multimedia-Subsystem,IMS,-Netzwerk verbunden ist, wobei der AS hat:
- eine erste Eingabeeinheit (31) zur Konfigurierung des AS mit festen Parametern, um als erste Eingangskriterien für Berechnungen mindestens eines Kriteriums zu dienen, welches ausgewählt ist aus: verfügbaren Transportmedien, Transportrouten, Transport-Zeitplänen und Kombinationen hieraus;
- eine zweite Eingabeeinheit (32) zum Empfangen am AS von dynamischen Parametern aus einer Mehrzahl von Transportmedien, die jeweilige Nebeninformation, anders als die aus den festen Parametern ableitbare, angeben, wobei die Nebeninformation über ein Transportmedium empfangen wird und sich auf Ereignisse bezieht, die ausgewählt sind aus: Verkehrsstaus, Unfällen, Straßeninstandsetzungen, Schieneninstandsetzungen, Transportmedien-Unverfügbarkeit, erwartbarer Verzögerungen und Kombinationen hieraus, um zweite Eingangskriterien für Berechnungen zu bestimmen;
- eine dritte Eingabeeinheit (33) zum Empfangen einer Nachricht durch eine Nutzereinheit, UE, wobei die UE (2) durch einen Nutzer des IMS in Gebrauch ist, wobei die Nachricht die Aktivierung eines roten Berechnungsdienstes beim AS aufruft, einer Position des Nutzers und mindestens eines gegebenen Ziels des Nutzers, um dritte Eingangskriterien für Berechnungen zu bestimmen;
- eine Verarbeitungseinheit (20) zum Verarbeiten der ersten, zweiten und dritten Eingangskriterien zur Bestimmung einer Anzahl von Routen aus dem Ort des Nutzers zum mindestens einen gegebenen Ziel hin; und
- eine Ausgabeeinheit (40) zum Liefern vom AS (1) zur UE (2) der verarbeiteten Anzahl von Routen.

9. AS nach Anspruch 8, wobei die Position des Nutzers als Geoposition in 2-dimensionalen oder 3-dimensionalen Koordinaten angegeben wird.

10. AS nach Anspruch 8, wobei die Verarbeitungseinheit (20) ausgebildet ist zu bestimmen, ob diese dynamischen Parameter die Erfüllung der ersten Eingangskriterien verhindern oder nicht.

11. AS nach Anspruch 9, wobei die dritte Eingabeeinheit (33) dazu ausgebildet ist, einen Geschwindigkeitsvektor von der UE (2) bezüglich eines Geschwindigkeitsbetrags und einer Geschwindigkeitsrichtung zu empfangen, und wobei die Verarbeitungseinheit (20) dazu ausgebildet ist, den Geschwindigkeitsvektor zusammen mit den Eingangskriterien zu verarbeiten, um die Anzahl von Routen aus der Geoposition des Nutzers zum mindestens einen gegebenen Ziel zu bestimmen.

12. AS nach Anspruch 8, weiter aufweisend eine vierte Eingabeeinheit (34) zum Empfangen von mindestens einem von Navigations- und meteorologischen Informationssystemen (7) von Ereignismitteilungen betreffend den Boden, die Luft und Ozeane, begleitet von entsprechend Geopositionen der Ereignisse, um vierte Eingangskriterien für Berechnungen zu bestimmen, und einen Schritt einer weiteren Verarbeitung am AS der vierten Eingangskriterien mit den ersten, zweiten und dritten Eingangskriterien, um die Anzahl von Routen aus der Geoposition der Nutzer zu mindestens einem gegebenen Ziel zu bestimmen.

13. AS nach Anspruch 8, wobei die dritte Eingabeeinheit (33) dazu ausgebildet ist, von der UE (2) eine Anzahl von Transportmedien zu empfangen, ausgewählt von: erdgebundenen Transportmedien, Lufttransportmedien, Seetransportmedien, zugtiergetriebenen Medien und Kombinationen hieraus, um fünfte Eingangskriterien für Berechnungen zu bestimmen, und wobei die Verarbeitungseinheit (20) ausgebildet ist zum Verarbeiten der fünften Eingangskriterien mit den ersten, zweiten und dritten Eingangskriterien, um die Anzahl der Routen aus der Geoposition der Nutzer zu mindestens einem gegebenen Ziel zu bestimmen.

14. AS nach Anspruch 9, weiter aufweisend eine fünfte Eingabeeinheit (35) zum Konfigurieren des AS mit Kartographie, wobei die Verarbeitungseinheit (20) ausgebildet ist zum Auswählen einer geeigneten Karte in der Kartographie, um die Position des Nutzers und des mindestens einen gegebenen Ziels darzustellen, und wobei die Ausgabeeinheit (40) ausgebildet ist zum Liefern vom AS an die UE der geeigneten Karte mit Information zum Darstellen der Position des Nutzers, des mindestens einen gegebenen Ziels, der anwendbaren Eingangskriterien und der entsprechenden Routen auf der Karte.

15. Nutzereinheit, UE, (2), die zum Zugriff auf ein IP-Multimedia-Subsystem,IS,-Netzwerk und zum Betrieben von Diensten desselben befähigt ist, wobei die UE hat:
- eine erste Ausgabeeinheit (81) zur Registrierung eines Nutzers des IMS im IMS-Netzwerk;
- eine erste Eingabeeinheit (91) zum Empfangen einer Bestätigung, dass der Nutzer im IMS-Netzwerk registriert ist;
- eine Positionsbestimmungseinheit (70), die zur Bestimmung einer Position des Nutzers und zum Einstellen mindestens eines durch den Nutzer gewünschten Ziels ausgebildet ist;
- eine zweite Ausgabeeinheit (82) zum Bewirken einer Aktivierung eines Routenberechnungsdienstes bei einem Applikations-Server, AS, (1), der mit dem IMS-Netzwerk verknüpft ist, und zum Angeben der Position des Nutzers und des mindestens einen Ziels des Nutzers als Eingangskriterien an den AS; und
- eine zweite Eingabeeinheit (92) zum Empfangen einer Anzahl von Routen von der Position des Nutzers zu dem mindestens einen gegebenen Ziel vom AS.

16. UE nach Anspruch 15, wobei die Position des Nutzers als Geoposition in 2-dimensionalen oder 3-dimensionalen Koordinaten angegeben wird.

17. UE nach Anspruch 16, weiter aufweisend:
- eine Verarbeitungseinheit (60) zum Berechnen eines Geschwindigkeitsvektors, welcher einen Geschwindigkeitsbetrag und eine Richtung einschließt, die die Bewegung der UE (2) repräsentiert; und wobei
- die zweite Ausgabeeinheit (82) dazu ausgebildet ist, den Geschwindigkeitsvektor an den AS zu liefern.

18. UE nach Anspruch 15, weiter aufweisend eine dritte Eingabeeinheit zum Empfangen vom Nutzer einer Mitteilung einer Anzahl von Transportmedien, die ausgewählt sind aus: erdgebundenen Transportmedien, Lufttransportmedien, Seetransportmedien, zugtiergetriebenen Medien und Kombinationen hieraus, um fünfte Eingangskriterien für Berechnungen zu bestimmen, und wobei die zweite Ausgabeeinheit (82) dazu ausgebildet ist, dem AS die ausgewählten Transportmedien zu liefern, um weitere Eingangskriterien für Berechnungen zu bestimmen.

19. UE nach Anspruch 16, wobei die zweite Eingabeeinheit (92) dazu ausgebildet ist, vom AS (1) eine Karte mit Information zur Darstellung der Geoposition des Nutzers, des mindestens einen gegebenen Ziels, anwendbarer Eingangskriterien und entsprechender Routen auf der Karte zu empfangen, und die UE weiter eine dritte Ausgabeeinheit zum Präsentieren der Karte mit der darin eingezeichneten Information an den Nutzer aufweist.

20. Computerprogramm, welches in einen internen Speicher eines Computers mit Eingabe- und Ausgabeeinheiten sowie mit einer Verarbeitung zu laden ist, wobei das Computerprogramm einen ausführbaren Code aufweist, der zur Ausführung der Verfahrensschritte gemäß einem der Ansprüche 1 bis 7 ausgebildet ist, wenn es in dem Computer läuft.

21. Computerprogramm nach Anspruch 20, wobei der ausführbare Code auf einem im Computer lesbaren Träger aufgezeichnet ist.

## Revendications

1. Procédé de fourniture d'un itinéraire vers une destination à un abonné d'un réseau formant un sous-système multimédia sous protocole internet, IMS pour « *Internet Protocol Multimedia Subsystem* », le procédé comprenant les étapes consistant à :
- configurer (S-120, S-135) un serveur d'applications, AS, (1) associé au réseau IMS avec des paramètres fixes pour déterminer comme premiers critères d'entrée pour les calculs au moins un critère sélectionné parmi les suivants : moyens de transport disponibles, itinéraires de transport, horaires de transport et combinaisons de ceux-ci ;
- recevoir (S-205, S-210) sur le serveur d'applications (1) des paramètres dynamiques en provenance d'une pluralité de moyens de transport, qui indiquent des informations d'incidents respectives autres que celles qui peuvent être dérivées des paramètres fixes, les informations d'incidents étant reçues pour chaque moyen de transport et portant sur des événements sélectionnés parmi les suivants : embouteillages, accidents, travaux routiers, réparations ferroviaires, indisponibilité du moyen de transport, retards à prévoir et combinaisons de ceux-ci, afin de déterminer des deuxièmes critères d'entrée pour les calculs ;
- à partir d'un équipement d'utilisateur, UE, (2) utilisé par un abonné du réseau IMS, demander (S-305, S-805) au serveur d'applications (1) l'activation d'un service de calcul d'itinéraire ;
- indiquer (S-405) par l'équipement d'utilisateur (2) au serveur d'applications (1) une position de l'abonné et au moins une destination donnée de l'abonné, afin de déterminer des troisièmes critères d'entrée pour les calculs ;
- traiter (S-415) par le serveur d'applications (1) les premiers, deuxièmes et troisièmes critères d'entrée pour déterminer un certain nombre d'itinéraires à partir de la position de l'abonné en direction de ladite au moins une destination donnée ; et
- communiquer (S-420) à l'équipement d'utilisateur (2) par le serveur d'applications (1) le nombre traité d'itinéraires.

2. Procédé selon la revendication 1, dans lequel la position de l'abonné est indiquée sous la forme d'une géolocalisation en coordonnées bidimensionnelles ou tridimensionnelles.

3. Procédé selon la revendication 1, dans lequel l'étape de réception des paramètres dynamiques sur le serveur d'applications (1) inclut une étape consistant à recueillir sur un centre d'incidents (4) les informations d'incidents respectives de chaque moyen de transport et une étape consistant à soumettre au serveur d'applications par le centre d'incidents les informations d'incidents respectives.

4. Procédé selon la revendication 2, dans lequel l'étape d'indication de la géolocalisation de l'abonné par l'équipement d'utilisateur (2) au serveur d'applications (1) comprend une étape consistant à calculer sur l'équipement d'utilisateur un vecteur de vitesse comprenant un modulo de vitesse et une direction de l'équipement d'utilisateur, ainsi qu'une étape consistant à indiquer ce vecteur de vitesse au serveur d'applications.

5. Procédé selon la revendication 1, comprenant en outre une étape consistant à recevoir sur le serveur d'applications (1), en provenance d'au moins un système d'informations météorologiques et de navigation (7), des avis d'incidents sur terre, sur mer et dans les airs, accompagnés de géolocalisations respectives desdits incidents, afin de déterminer des quatrièmes critères d'entrée pour les calculs ; et une étape consistant à traiter sur le serveur d'applications les quatrièmes critères d'entrée avec les premiers, deuxièmes et troisièmes critères d'entrée afin de déterminer ledit nombre d'itinéraires à partir de la géolocalisation de l'abonné en direction de ladite au moins une destination donnée.

6. Procédé selon la revendication 1, comprenant en outre une étape consistant à indiquer par l'équipement d'utilisateur au serveur d'applications un certain nombre de moyens de transport sélectionnés parmi les suivants : moyens de transport terrestres, moyens de transport aériens, moyens de transport maritimes, moyens de transport animaux, et combinaisons de ceux-ci, afin de déterminer des cinquièmes critères d'entrée pour les calculs ; et une étape consistant à traiter sur le serveur d'applications les cinquièmes critères d'entrée avec les premiers, deuxièmes et troisièmes critères d'entrée afin de déterminer ledit nombre d'itinéraires à partir de la géolocalisation de l'abonné en direction de ladite au moins une destination donnée.

7. Procédé selon la revendication 1, comprenant en outre une étape consistant à configurer le serveur d'applications avec une fonction de cartographie ; une étape consistant à sélectionner une carte adéquate dans la fonction de cartographie afin d'y tracer la position de l'abonné et ladite au moins une destination donnée ; et une étape consistant à soumettre par le serveur d'applications à l'équipement d'utilisateur la carte adéquate avec des informations pour tracer sur ladite carte la position de l'abonné, ladite au moins une destination donnée, des critères d'entrée applicables et des itinéraires correspondants.

8. Serveur d'applications, AS, (1) associé à un réseau formant un sous-système multimédia sous protocole internet, IMS pour « *Internet Protocol Multimedia Subsystem* », le serveur d'applications possédant :
- une première unité d'entrée (31) destinée à configurer le serveur d'applications avec des paramètres fixes pour déterminer comme premiers critères d'entrée pour les calculs au moins un critère sélectionné parmi les suivants : moyens de transport disponibles, itinéraires de transport, horaires de transport et combinaisons de ceux-ci ;
- une deuxième unité d'entrée (32) destinée à recevoir sur le serveur d'applications des paramètres dynamiques en provenance d'une pluralité de moyens de transport, qui indiquent des informations d'incidents respectives autres que celles qui peuvent être dérivées des paramètres fixes, les informations d'incidents étant reçues pour chaque moyen de transport et portant sur des événements sélectionnés parmi les suivants : embouteillages, accidents, travaux routiers, réparations ferroviaires, indisponibilité du moyen de transport, retards à prévoir, et combinaisons de ceux-ci, afin de déterminer des deuxièmes critères d'entrée pour les calculs ;
- une troisième unité d'entrée (33) destinée à recevoir, en provenance d'un équipement d'utilisateur, UE, (2) qui est utilisé par un abonné au réseau IMS, un message adressé au serveur d'applications demandant l'activation d'un service de calcul d'itinéraire et indiquant une position de l'abonné et au moins une destination donnée de l'abonné, afin de déterminer des troisièmes critères d'entrée pour les calculs ;
- une unité de traitement (20) destinée à traiter les premiers, deuxièmes et troisièmes critères d'entrée pour déterminer un certain nombre d'itinéraires à partir de la position de l'abonné en direction de ladite au moins une destination donnée ; et
- une unité de sortie (40) destinée à communiquer à l'équipement d'utilisateur (2) par le serveur d'applications (1) le nombre traité d'itinéraires.

9. Serveur d'applications selon la revendication 8, dans lequel la position de l'abonné est indiquée sous la forme d'une géolocalisation en coordonnées bidimensionnelles ou tridimensionnelles.

10. Serveur d'applications selon la revendication 8, dans lequel l'unité de traitement (20) est conçue pour déterminer si ces paramètres dynamiques empêchent ou non de satisfaire les premiers critères d'entrée.

11. Serveur d'applications selon la revendication 9, dans lequel la troisième unité d'entrée (33) est conçue pour recevoir un vecteur de vitesse comprenant un modulo de vitesse et une direction de la vitesse, et dans lequel l'unité de traitement (20) est conçue pour traiter ledit vecteur de vitesse avec les critères d'entrée afin de déterminer ledit nombre d'itinéraires à partir de la géolocalisation de l'abonné en direction de ladite au moins une destination donnée.

12. Serveur d'applications selon la revendication 8, comprenant en outre une quatrième unité d'entrée (34) destinée à recevoir, en provenance d'au moins un système d'informations météorologiques et de navigation (7), des avis d'incidents sur terre, sur mer et dans les airs, accompagnés de géolocalisations respectives desdits incidents, afin de déterminer des quatrièmes critères d'entrée pour les calculs ; et dans lequel l'unité de traitement est conçue pour traiter les quatrièmes critères d'entrée avec les premiers, deuxièmes et troisièmes critères d'entrée afin de déterminer ledit nombre d'itinéraires à partir de la géolocalisation de l'abonné en direction de ladite au moins une destination donnée.

13. Serveur d'applications selon la revendication 8, dans lequel la troisième unité d'entrée (33) est conçue pour recevoir de l'équipement d'utilisateur un certain nombre de moyens de transport sélectionnés parmi les suivants : moyens de transport terrestres, moyens de transport aériens, moyens de transport maritimes, moyens de transport animaux, et combinaisons de ceux-ci, afin de déterminer des cinquièmes critères d'entrée pour les calculs ; et dans lequel l'unité de traitement (20) est conçue pour traiter les cinquièmes critères d'entrée avec les premiers, deuxièmes et troisièmes critères d'entrée afin de déterminer ledit nombre d'itinéraires à partir de la géolocalisation de l'abonné en direction de ladite au moins une destination donnée.

14. Serveur d'applications selon la revendication 9, comprenant en outre une cinquième unité d'entrée (35) destinée à configurer le serveur d'applications avec une fonction de cartographie ; dans lequel l'unité de traitement (20) est conçue pour sélectionner une carte adéquate dans la fonction de cartographie afin d'y tracer la position de l'abonné et ladite au moins une destination donnée ; et dans lequel l'unité de sortie (40) est conçue pour soumettre à l'équipement d'utilisateur la carte adéquate avec des informations pour tracer sur ladite carte la position de l'abonné, ladite au moins une destination donnée, des critères d'entrée adéquats et des itinéraires correspondants.

15. Équipement d'utilisateur, UE, (2) configuré pour accéder à un réseau formant un sous-système multimédia sous protocole internet, IMS pour « *Internet Protocol Multimedia Subsystem* », et exploiter des services fournis par celui-ci, l'équipement d'utilisateur possédant :
- une première unité de sortie (81) destinée à enregistrer un abonné au service IMS sur le réseau IMS ;
- une première unité d'entrée (91) destinée à recevoir une confirmation que l'abonné est bien enregistré sur le réseau IMS ;
- une unité de localisation (70) conçue pour déterminer une position de l'abonné et pour fixer au moins une destination donnée souhaitée par l'utilisateur ;
- une deuxième unité de sortie (82) destinée à demander à un serveur d'applications, AS, (1) associé au réseau IMS l'activation d'un service de calcul d'itinéraire, et pour fournir au serveur d'applications comme critères d'entrée la position de l'abonné et ladite au moins une destination donnée de l'abonné ; et
- une deuxième unité d'entrée (92) destinée à recevoir du serveur d'applications un certain nombre d'itinéraires à partir de la position de l'abonné en direction de ladite au moins une destination donnée.

16. Équipement d'utilisateur selon la revendication 15, dans lequel la position de l'abonné est indiquée sous la forme d'une géolocalisation en coordonnées bidimensionnelles ou tridimensionnelles.

17. Équipement d'utilisateur selon la revendication 16, comprenant en outre :
- une unité de traitement (60) destinée à calculer un vecteur de vitesse qui comprend un modulo de vitesse et une direction représentant le déplacement de l'équipement d'utilisateur (2) ; et
- dans lequel la deuxième unité de sortie (82) est conçue pour fournir ledit vecteur de vitesse au serveur d'applications.

18. Équipement d'utilisateur selon la revendication 15, comprenant en outre une troisième unité d'entrée destinée à recevoir de l'abonné une notification d'un certain nombre de moyens de transport sélectionnés parmi les suivants : moyens de transport terrestres, moyens de transport aériens, moyens de transport maritimes, moyens de transport animaux, et combinaisons de ceux-ci, afin de déterminer des cinquièmes critères d'entrée pour les calculs ; et dans lequel la deuxième unité de sortie (82) est conçue pour fournir au serveur d'applications les moyens de transport sélectionnés afin de déterminer de nouveaux critères d'entrée pour le calculs.

19. Équipement d'utilisateur selon la revendication 16, dans lequel la deuxième unité d'entrée (92) est conçue pour recevoir du serveur d'applications (1) une carte avec des informations pour tracer, sur ladite carte, la position de l'abonné, ladite au moins une destination donnée, des critères d'entrée applicables et des itinéraires correspondants ; et l'équipement d'utilisateur comprenant en outre une troisième unité de sortie destinée à présenter à l'utilisateur la carte avec les informations qui y sont tracées.

20. Programme d'ordinateur, pouvant être chargé dans une mémoire interne d'un ordinateur ayant des unités d'entrée et de sortie ainsi qu'une unité de traitement, le programme d'ordinateur comprenant du code exécutable conçu pour mettre en oeuvre les étapes du procédé selon l'une quelconque des revendications 1 à 7 lorsqu'il est exécuté dans l'ordinateur.

21. Programme d'ordinateur selon la revendication 20, dans lequel le code exécutable est enregistré sur un support lisible dans un ordinateur.
